# EUROPÄISCHE PATENTSCHRIFT

(11) **EP 1 386 796 B1**
(45) Veröffentlichungstag und Bekanntmachung des Hinweises auf die Patenterteilung: **29.03.2006**
(21) Anmeldenummer: 03015146.8
(22) Anmeldetag: 04.07.2003
(51) Int. Cl.: B60R 22/20

(54) **Gurthöhenversteller für Kraftfahrzeuge**
Height adjustment device for a vehicle safety belt
Dispositif de réglage en hauteur d'une ceinture de sécurité pour véhicule

(30) Priorität: 26.07.2002 DE 20211345 U
(43) Veröffentlichungstag der Anmeldung: 04.02.2004
(73) Patentinhaber: Griesemer, Albert, 57462 Olpe-Biggesee (DE)
(72) Erfinder: Griesemer, Albert, 56462 Olpe-Biggesee (DE); Kreim, Adam, 64572 Büttelborn (DE)
(74) Vertreter: Grommes, Karl F.

(56) Entgegenhaltungen:
- WO-A-99/06247
- DE-A- 19 822 696

## Beschreibung

Die Erfindung betrifft einen Gurthöhenversteller für Kraftfahrzeuge gemäß dem Oberbegriff von Anspruch 1.

Derartige Gurthöhenversteller sind in verschiedener Ausführungsform bekannt. So ist beispielsweise durch die WO 99/06247 A ein Gurthöhenversteller bekannt, welcher sich insbesondere durch eine verbesserte Blockiersicherheit auszeichnet. Gemeinsam ist den bekannten Höhenverstellem folgendes Bauprinzip. An einer flachen oder in einer profilierten, offenen Führungsschiene mit U-förmigem oder C-förmigem Querschnitt ist ein Verstellteil geführt, welches in vorgesehenen Positionen arretiert werden kann.

Da ein solcher Gurthöhenversteller sich in extremen Situationen (Crash-Fall) bewähren muss, werden an ihn hohe Anforderungen bezüglich seiner Funktion und insbesondere Formbeständigkeit gestellt. Um die geforderten Festigkeitswerte zu gewährleisten, werden derartige Höhenversteller regelmäßig aus Stahl hergestellt. Zur Verbesserung der Gleiteigenschaften des Verstellteils wie auch zur Minderung von störenden Klappergeräuschen kommt zusätzlich auch Kunststoff zum Einsatz.

Steht auf der einen Seite die Forderung nach hoher Sicherheit der dafür maßgeblichen Bauelemente, so steht auf der anderen Seite im Automobilbau die Forderung nach Materialeinsparung, Gewichtsreduzierung, Treibstoffeinsparung etc. Wie gesagt, ist die erste und oberste Forderung an einen Gurthöhenversteller eine hohe Zuverlässigkeit und Formbeständigkeit. Versuche, solche Höhenversteller in geringerer Materialstärke auszuführen oder durch leichtere Werkstoffe zu ersetzen, mußten bereits an vorgenannter Forderung scheitern. Weder das eine noch das andere vermochte allein weiterzuhelfen.

Hier setzt die Erfindung an. Sie möchte einen Gurthöhenversteller mit unverminderter Zuverlässigkeit vorschlagen, welcher sich durch eine spürbare Gewichtsreduktion auszeichnet und zu Ersparnissen bei der Herstellung sowie im späteren Einsatz in einem Kraftfahrzeug führt.

Gelöst wird diese Aufgabe mit den kennzeichnenden Merkmalen des Anspruchs 1. Zweckmäßige Weiterbildungen geben die Unteransprüche an.

Die Erfindung beruht auf mehreren Einzelüberlegungen, welche letztlich in vorteilhafter Weise miteinander kombiniert werden. Zu den Grundgedanken zählt, dass eine Führungsschiene mit flachem Profil, U- oder C-Profil, nur dann formbeständig sein kann, wenn sie auch ausreichend dimensioniert ist. Dieser Gedanke allein konnte jedoch noch nicht den Horizont für die vorliegende Erfindung öffnen. Es war vielmehr die zusätzliche Erkenntnis, dass eine andere Profilform angestrebt werden muß, nämlich ein geschlossenes Kastenprofil. Dies erscheint auf den ersten Blick widersprüchlich, da ein Kastenprofil noch voluminöser als die bisherigen Profile erscheint. Auch muß es überraschen, dass als Grundlage für das vorgeschlagene Kastenprofil ein U-Profil dienen soll, welches von Hause aus anderen Profilen in puncto Formstabilität eher unterlegen erscheint. Als evtl. noch weiter entwicklungsfähig galt zuletzt lediglich das C-Profil.

Erfindungsgemäß lassen sich jedoch jetzt mit einem U-Profil überraschend gute Ergebnisse erzielen. Das vorgeschlagene Kastenprofil kann insbesondere während der Herstellung (=Zusammenbau) des Gurthöhenverstellers aus dessen verschiedenen Bauteilen realisiert werden, indem nämlich ein zunächst offenes U-Profil mit einem Verstell- und Arretierteil zusammengebracht und im weiteren das U-Profil mittels eines Komplementärteils geschlossen wird. Bei dem Komplementärteil kann es sich um einzelne Stege handeln oder aber um eine durchgehende Platte. Stege oder Platte können form- und kraftschlüssig mit dem U-Profil zu einer zumindest abschnittweise geschlossenen Führungsschiene verbunden werden.

Bereits ein solcher Aufbau erlaubt es, für das U-Profil geringere Wandstärken als bisher zu wählen und damit zu einer beträchtlichen Gewichtsreduzierung zu gelangen. Der erfindungsgemäße Aufbau erlaubt es aber auch, neue Werkstoffe zur Realisierung in Betracht zu ziehen, insbesondere Leichtmetall. Dabei müssen die Teile nicht unbedingt einheitlich aus ein und demselben Werkstoff bestehen, vielmehr können je nach spezieller sonstiger Belastung auch unterschiedliche Werkstoff gewählt werden.

Als besonders vorteilhaft erscheint es, wenn für ein Komplementärteil eine widerstandsfähige Aluminium-Legierung oder Stahl als Werkstoff gewählt werden, während der übrige und überwiegende Teil der Führungsschiene aus Aluminium bestehen kann.

Das mit der Erfindung erzielbare Ergebnis kann in Zahlen wie folgt verdeutlicht werden. Höhenversteller bekannter Bauart erreichen ein Gewicht in der Größenordnung von ca. 350-400 g. Daran hat die Führungsschiene im allgemeinen einen Anteil von ca. 200 g. Mit einem erfindungsgemäßen Gurthöhenversteller werden dagegen insgesamt nur ca. 200 g erreicht.

Diese beträchtliche Gewichtsreduktion ist um so beachtlicher, als in einem Kraftfahrzeug regelmäßig mehrere Gurthöhenversteller zum Einsatz kommen und sich damit die Gewichtsreduktion noch entsprechend vervielfacht. Kostenersparnisse ergeben sich auch bei der Herstellung insoweit, als die Formwerkzeuge für Leichtmetall nur einen Bruchteil derjenigen für Stahl ausmachen.

U-Profil und Komplementärteil sind vorteilhafterweise so in ihrer Form aufeinander abgestimmt, dass sie schon durch einfaches Zusammenstecken in ihre Endlage zu bringen sind und darin bereits durch einen einfachen weiteren Verfahrensschritt, wie ein teilweises Umformen (Verpressen) dauerhaft gesichert werden können. Dieses wird insbesondere dann erreicht, wenn das Komplementärteil in Richtung der Schenkel des U-Profils verlaufende Ausnehmungen aufweist, in die die Schenkel mit laschenförmigen Abschnitten eingreifen, wobei deren Überstände in Richtung der Ebene des Komplementärteils abgebogen sind.

Vorteilhaft besitzen die Schenkel des U-Profils einen seitlichen Anschlag für das Komplementärteil zur genauen Begrenzung des Abstandes und sicheren Fixierung an dem U-Profil.

Zweckmäßigerweise sind die freien Schenkel innenseitig nahe ihrem Ende mit einer Nut als Sollbiegestelle versehen. Letztere kann insbesondere auch angeprägt sein.

Vorteilhaft weisen die Schenkel am Übergang zur Vorderseite des U-Profils einen verdickten Querschnitt auf. Damit erreicht das U-Profil eine hohe Biegesteifigkeit, wobei es lediglich an den kritischen Knotenpunkten einen Materialzuwachs (zur Aussteifung) erfährt, während die übrigen Bereiche so gering wie möglich dimensioniert werden können.

Ähnliches wird erreicht, wenn die Schenkel jeweils mit der Vorderseite des U-Profils einen höckerartigen Übergangs- oder Versteifungsbereich bilden. Dieser kann sowohl abgerundet als auch eckig verlaufen.

Das Komplementärteil kann je nach der zu erwartenden Belastung stärker als das U-Profil gewählt werden. Wird im einfachsten Falle eine flache rechteckige Platte vorgesehen, so kann ein Festigkeitszuwachs durch eine stärkere Dimensionierung oder aber die Wahl eines höher beanspruchbaren Werkstoffs erreicht werden. Darüber hinaus besteht die Möglichkeit, das Komplementärteil durch Verformung zusätzlich zu versteifen, insbesondere durch Anbringung von Versteifungssicken, Biegekanten, Verkröpfungen u. dgl.

Die höhere Beanspruchbarkeit des Komplementärteils bedeutet hohe Formbeständigkeit und Verschleißfestigkeit, was sich in zweifacher Hinsicht vorteilhaft auswirkt. Zum ersten garantiert sie eine passgenaue Herstellung der Führungsschiene, insbesondere auf dem Wege einer weiteren Verformung des U-Profils. Zum zweiten erlaubt sie ggfs. eine verschleißarme oder sogar -freie Krafteinleitung vom Verstellteil in die Führungsschiene.

Bei einer Weiterbildung weist deshalb das Komplementärteil Ausnehmungen zur Begrenzung von Rastpositionen auf, wobei Schrägen ein sicheres Einrasten wie auch leichtes Lösen im Bedarfsfalle fördern.

Schließlich kann das Verstellteil über angespritzte Gleit- und Fixierschuhe verfügen, denen Bedeutung sowohl für die Montage (Komplettierung) der Führungsschiene, wie auch für die Benutzung des Verstellteils zukommt. Sie sind so konzipiert, dass sie sich für einen Durchtritt durch den Führungsschlitz bei der Montage der Führungsschiene beidrücken lassen, danach aber den Führungsschlitz übergreifen und außerhalb der Führungsschiene geführt sind. Dabei tragen sie gleichzeitig zum Halt des Verstellteils in der Führungsschiene bei.

Weitere Einzelheiten und Vorteile werden nachstehend anhand der Zeichnungen für ein bevorzugtes Ausführungsbeispiel beschrieben.
Darin zeigen:
- Fig. 1: eine explosionsartige, perspektivische Darstellung der Bestandteile eines Gurthöhenverstellers vor dem Zusammenbau,
- Fig. 2: eine vereinfachte Draufsicht auf einen zusammengebauten Gurthöhenversteller,
- Fig. 3: den Gegenstand von Fig. 2 im Längsschnitt entlang der Linie A-A,
- Fig. 4: ein U-Profil, stark vergrößert in einem Querschnitt,
- Fig. 5: den Gegenstand von Fig. 3, vergrößert und im Querschnitt entlang der Linie B-B,
- Fig. 6: den Gegenstand von Fig. 3, vergrößert und im Querschnitt entlang der Linie C-C,
- Fig. 7: den Gegenstand von Fig. 3, vergrößert und im Querschnitt entlang der Linie D-D,
- Fig. 8 - 11: ein U-Profil, vergrößert in einem Querschnitt, mit darin eingesetztem, jeweils unterschiedlich verformtem Komplementärteil,
- Fig. 12, 13: ein U-Profil, vergrößert in einem Querschnitt, mit unterschiedlich ausgeformten Versteifungsbereichen und
- Fig. 14: den Gegenstand von Fig. 13, mit einem U-Profil zu einer Führungsschiene zusammengefügt.

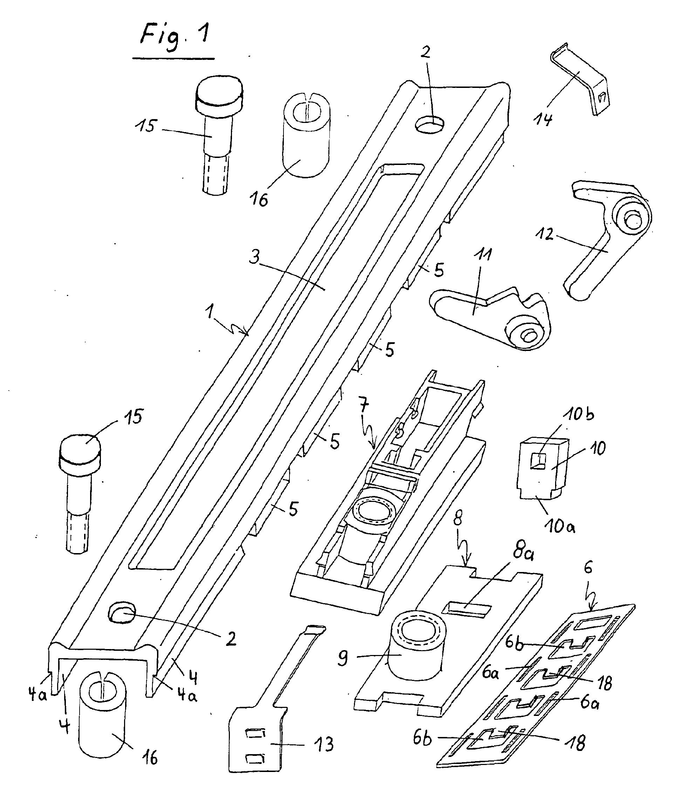

Nach Fig. 1 zählt zu den Bestandteilen eines erfindungsgemäßen Gurthöhenverstellers zunächst ein offenes U-Profil 1 aus Aluminium, welches an seiner Vorderseite (Sichtseite) mit Bohrungen 2 und einem Führungsschlitz 3 versehen ist und Schenkel 4 mit laschenförmigen Abschnitten 5 besitzt. Am Übergang von der Sichtseite in die Schenkel 4 ist der Querschnitt verdickt, was ein Zusammendrücken bzw. ein Auseinanderbiegen der Schenkel 4 erschwert. An den freien Enden der Schenkel 4 ist zudem der Querschnitt stufenartig verjüngt, wodurch sich ein Anschlag 4a für ein auf die Schenkel 4 aufsteckbares Komplementärteil 6 ergibt, welches hier die Form einer flachen rechteckigen Platte hat und aus einer härteren und widerstandsfähigeren Aluminium-Legierung besteht.

Das Komplementärteil 6 besitzt zum einen Ausnehmungen 6a, welche in Richtung der Schenkel 4 des U-Profils 1 verlaufen um insbesondere deren laschenförmige Abschnitte 5 aufnehmen zu können. Dazwischen befinden sich weitere Ausnehmungen 6b, welche Rastpositionen für einen Verstellschlitten 7 darstellen. Letzterer besteht aus Kunststoff und hat als Kern ein metallenes Verstellteil 8 mit einer Gewindebuchse 9 für die Befestigung eines hier nicht dargestellten Umlenkbeschlages eines Sicherheitsgurtes.

Der Verstellschlitten 7 samt dem Verstellteil 8 nehmen ein bewegliches Arretierteil (sog. Rastkulisse) 10 auf. Letzteres kann mit seinem (ggf. verjüngten) unteren Ende 10a durch eine Öffnung 8a im Verstellteil 8 in eine Ausnehmung 6b des Komplementärteils 6 eingerückt und davon auch wieder zurückgezogen werden. Für den Eingriff eines elastischen Betätigungsmechanismus weist das Arretierteil 10 eine Aussparung 10b auf. Der Betätigungsmechanismus umfaßt hier Verstellhebel 11 und Auslösehebel 12 sowie Blattfeder 13 und Ausgleichsfeder 14. Der Anbringung des U-Profils 1 (bzw. der daraus gebildeten Führungsschiene an der sogenannten B-Säule) in einem Kraftfahrzeug dienen schließlich Befetigungsschrauben 15 in Verbindung mit (geschlitzten) Distanzhülsen 16.

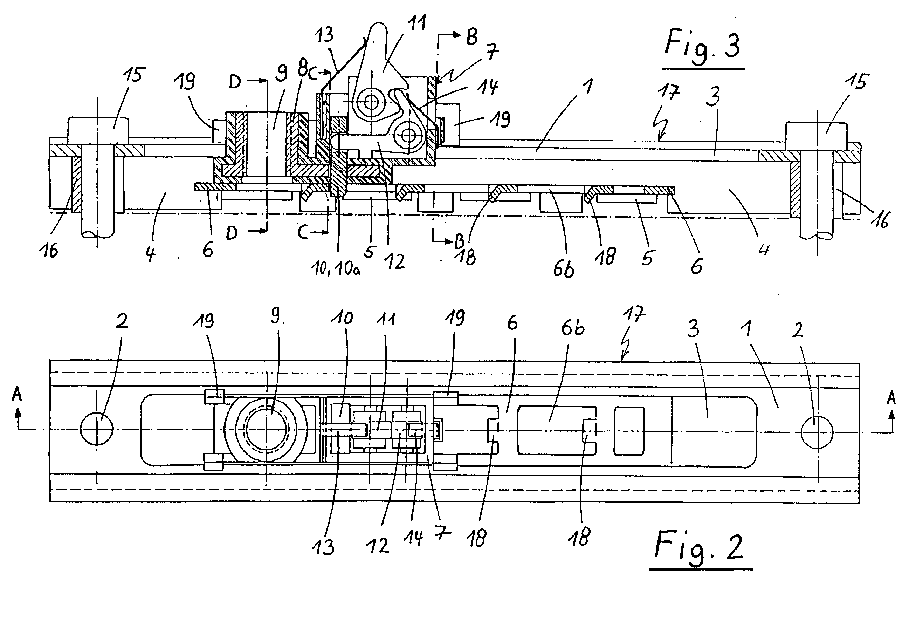

Das funktionelle Zusammenwirken der genannten Bestandteil sowie weitere Bestandteile gehen aus den Fig. 2 und 3 hervor. Danach bildet das U-Profil 1, welches mit dem Komplementärteil 6 zusammengefügt und verpresst ist, eine Führungsschiene 17, welche entlang einer strichpunktierten Grundlinie zur Anlage an einer sogenannten B-Säule in einem Fahrzeug gelangt. Der Verstellschlitten 7 aus Kunststoff mit seinem Verstellteil 8 aus Metall ist darin in Längsrichtung verschieblich, sobald das Arretierteil 10 aus der gezeigten Arretierstellung gelöst wird. Dazu wird es mittels des erwähnten Betätigungsmechanismus aus der gezeigten Rastposition gezogen, d.h. außer Eingriff mit der Ausnehmung 6b gebracht, worauf der Verstellschlitten 7 in eine andere Lage verschoben und dort erneut zum Einrasten gebracht werden kann. Der Betätigungsmechanismus hat hier für das Arretierteil 10 eine besondere, nämlich bewegungsumlenkende Funktion.

Dem Lösen und Einführen des Arretierteils 10 in eine neue Rastposition dienen auch Schrägen 18, welche an der nicht beaufschlagten Seite der Ausnehmungen 6b angeordnet sind. Dementsprechend ist auch das verjüngte Ende 10a des Arretierteils 10 rückseitig etwas abgeschrägt bzw. abgerundet. Erwähnt werden sollen noch sogenannte Gleit- und Fixierschuhe 19, welche an den Verstellschlitten 7 angespritzt sind und einen Anschlag bzw. eine Führung für den Verstellschlitten 7 außerhalb der Führungsschiene 17 bilden.

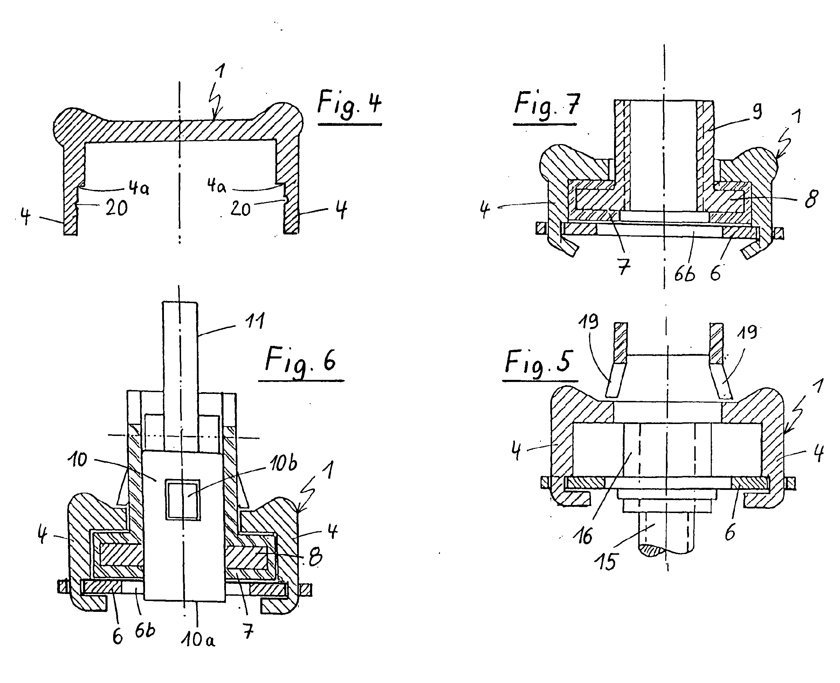

Fig. 4 läßt ein weiteres Detail erkennen, nämlich eine innenseitig an den Schenkeln 4 des U-Profils 1 verlaufende Nut 20, welche für das darauffolgende Umbiegen der freien Enden eine Sollbiegestelle darstellt. Sie verschwindet mit dem Umbiegen und ist deshalb bei den weiteren Figuren 5-7 nicht mehr wahrnehmbar. Aus den letztgenannten Figuren sind die Zuordnungen und Funktionsweisen der bisher beschriebenen Bestandteile noch weiter zu erkennen. Sie erklären sich mit den jeweils in derselben Bedeutung verwendeten Bezugsziffern.

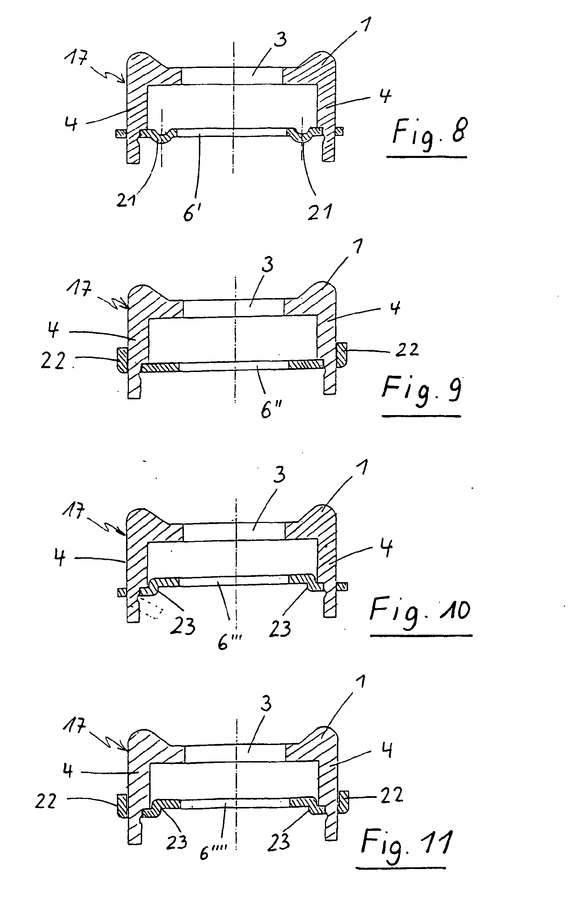

Die Fig. 8 - 11 lassen verschiedene Komplementärteile 6', 6", 6"', 6"" erkennen, deren Festigkeit (Steifigkeit) durch eine weitergehende Verformung erhöht ist. Insbesondere handelt es sich dabei um Versteifungssicken 21, Biegekanten 22 und Verkröpfungen 23.

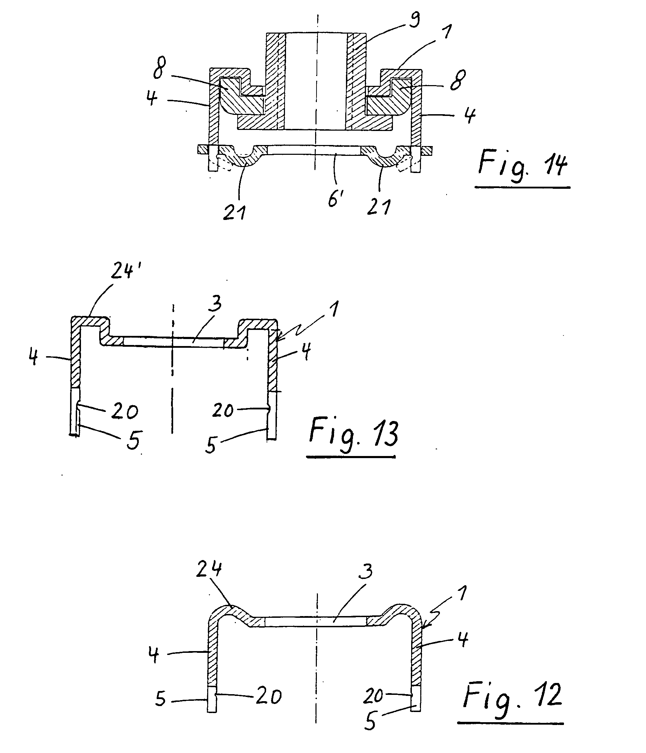

Aus den Fig. 12 - 14 geht schließlich hervor, dass auch an dem U-Profil 1 weitere partielle Versteifungsmaßnahmen vorgesehen werden können, nämlich in Form höckerartiger Versteifungs- oder Übergangsbereiche 24 und 24' zwischen den Schenkeln 4 und der Vorderseite des U-Profils 1.

### Bezugszeichenliste

- 1: U-Profil
- 2: Bohrung
- 3: Führungsschlitz
- 4: Schenkel
- 4a: Anschlag
- 5: laschenförmiger Abschnitt
- 6: Komplementärteil (Platte)
- 6': Komplementärteil
- 6": Komplementärteil
- 6"': Komplementärteil
- 6"": Komplementärteil
- 6a: Ausnehmung
- 6b: Ausnehmung
- 7: Verstellschlitten
- 8: Verstellteil
- 8a: Öffnung
- 9: Gewindebuchse
- 10: Arretierteil (Rastkulisse)
- 10a: unteres Ende
- 10b: Aussparung
- 11: Verstellhebel
- 12: Auslösehebel
- 13: Blattfeder
- 14: Ausgleichsfeder
- 15: Befestigungsschraube
- 16: Distanzhülse
- 17: Führungsschiene
- 18: Schräge
- 19: Gleitschuh, Fixierschuh
- 20: Nut (Sollbiegelinie)
- 21: Versteifungssicke
- 22: Biegekante
- 23: Verkröpfung
- 24: Übergangsbereich, Versteifungsbereich
- 24': Übergangsbereich, Versteifungsbereich

## Patentansprüche

1. Gurthöhenversteller für Kraftfahrzeuge, bestehend aus einer Führungsschiene sowie einem eine Gewindebuchse aufweisenden und entlang der Führungsschiene im Bereich eines offenen Führungschlitzes verschieblichen Verstellteil, welches ein senkrecht zu seiner Verschieberichtung bewegliches Arretierteil trägt, wobei das Verstellteil in dafür vorgesehenen Rastpositionen frei wählbar arretiert werden kann und das Arretierteil mittels eines elastischen Rückstellorgans in Arretierstellung gehalten wird, **dadurch gekennzeichnet, dass** die Führungsschiene (17) aus einem etwa U-förmigen Profil (1) sowie einem die freien Schenkel (4) des U-Profils (1) mindestens abschnittsweise verbindenden Komplementärteil (6) besteht, wobei U-Profil (1) und Komplementärteil (6) aus Metall bestehen, und so ausgeformt sind, dass die Schenkel (4) des U-Profils (1) mit dem Komplementärteil (6) form- und kraftschlüssig verpressbar sind, und U-Profil (1) und Komplementärteil (6) im montagebereiten Zustand ein geschlossenes Kastenprofil bilden.

2. Gurthöhenversteller nach Anspruch 1, **dadurch gekennzeichnet, dass** das U-Profil (1) aus Leichtmetall besteht.

3. Gurthöhenversteller nach Anspruch 1, **dadurch gekennzeichnet, dass** das Komplementärteil (6) aus einer Aluminium-Legierung oder Stahl besteht.

4. Gurthöhenversteller nach einem der Ansprüche 1 bis 3, **dadurch gekennzeichnet, dass** das Komplementärteil (6) in Richtung der Schenkel (4) des U-Profils (1) verlaufende Ausnehmungen (6a) aufweist, in die die Schenkel (4) mit laschenförmigen Abschnitten (5) eingreifen, wobei deren Überstände in Richtung der Ebene des Komplementärteils (6) abgebogen sind.

5. Gurthöhenversteller nach einem der Ansprüche 1 bis 4, **dadurch gekennzeichnet, dass** die Schenkel (4) des U-Profils (1) einen seitlichen Anschlag (4a) für das Komplementärteil (6) zur genauen Begrenzung des Abstandes und sicheren Fixierung an dem U-Profil (1) aufweisen.

6. Gurthöhenversteller nach einem der Ansprüche 1 bis 5, **dadurch gekennzeichnet, dass** die freien Schenkel (4) innenseitig nahe ihrem Ende eine Nut (20) als Sollbiegestelle aufweisen.

7. Gurthöhenversteller nach einem der Ansprüche 1 bis 6, **dadurch gekennzeichnet, dass** die Schenkel (4) am Übergang zur Vorderseite des U-Profils (1) einen verdickten Querschnitt aufweisen.

8. Gurthöhenversteller nach einem der Ansprüche 1 bis 6, **dadurch gekennzeichnet**, die Schenkel (4) jeweils mit der Vorderseite des U-Profils (1) einen höckerartigen Übergangs- und Versteifungsbereich (24, 24') bilden.

9. Gurthöhenversteller nach einem der Ansprüche 1 bis 8, **dadurch gekennzeichnet, dass** das Komplementärteil (6) ein durch Verformung versteiftes Montageteil ist.

10. Gurthöhenversteller nach einem der Ansprüche 1 bis 9, **dadurch gekennzeichnet, dass** das Komplementärteil (6) Ausnehmungen (6b) zur Begrenzung von Rastpositionen aufweist, welche an ihrer nicht beanspruchten Seite mit einer Schräge (18) versehen sind.

11. Gurthöhenversteller nach einem der Ansprüche 1 bis 10, **dadurch gekennzeichnet, dass** das Verstellteil (8) den metallenen Kern eines Verstellschlittens (7) aus Kunststoff bildet und der Verstellschlitten (7) über angespritzte Gleit- und Fixierschuhe (19) aus Kunststoff verfügt, welche sich für einen Durchtritt durch den Führungsschlitz (3) bei der Montage der Führungsschiene (17) beidrücken lassen, danach aber den Führungsschlitz (3) übergreifen und außen an der Führungsschiene (17) geführt sind, wobei sie gleichzeitig zum Halt des Verstellteils (8) in der Führungsschiene (17) beitragen.

## Claims

1. Belt height adjuster for motor vehicles, consisting of a guide rail and an adjuster part which has a threaded bushing, is slidable along the guide rail in the region of an open guide slot, and carries a locking part movable perpendicularly to its sliding direction, the adjuster part being lockable in any chosen one of a series of catch positions provided for this purpose, and the locking part being held in the locked position by means of an elastic restoring element, **characterized in that** the guide rail (17) consists of an approximately U-shaped section (1) and a complementary part (6) at least locally connecting the free arms (4) of the U-section (1), the U-section (1) and the complementary part (6) being made of metal and formed so that the arms (4) of the U-section (1) and the complementary part (6) can be pressed together with a both positive and frictional connection and the U-section (1) and the complementary part (6) form a closed box section when in the ready-to-assemble condition.

2. Belt height adjuster according to Claim 1, **characterized in that** the U-section (1) is made of light alloy.

3. Belt height adjuster according to Claim 1, **characterized in that** the complementary part (6) is made of aluminium alloy or steel.

4. Belt height adjuster according to any one of Claims 1 to 3, **characterized in that** the complementary part (6) has cutouts (6a) running in the same direction as the arms (4) of the U-section (1), into which tab-portions (5) of the arms (4) engage, the salient portions of the said tab-portions being bent over towards the plane of the complementary part (6).

5. Belt height adjuster according to any one of Claims 1 to 4, **characterized in that** the arms (4) of the U-section (1) have a lateral abutment (4a) for the complementary part (6) to precisely limit its clearance and enable it to be fixed securely to the U-section (1).

6. Belt height adjuster according to any one of Claims 1 to 5, **characterized in that** the free arms (4) have a groove (20) on the inside, near their ends, as a predetermined bending point.

7. Belt height adjuster according to any one of Claims 1 to 6, **characterized in that** the arms (4) have a thickened cross-section at the transition to the front side of of the U-section (1).

8. Belt height adjuster according to any one of Claims 1 to 6, **characterized in that** each arm (4) forms with the front side of the U-section (1) a humped transitional and stiffening region (24, 24').

9. Belt height adjuster according to any one of Claims 1 to 8, **characterized in that** the complementary part (6) is an assembly component stiffened by forming.

10. Belt height adjuster according to any one of Claims 1 to 9, **characterized in that** the complementary part (6) has cutouts (6b) which serve to limit the catch positions and are provided with a cant (18) on their inactive side.

11. Belt height adjuster according to any one of Claims 1 to 10, **characterized in that** the adjuster part (8) forms the metal inner core of an adjuster slide (7) made of plastic material and the adjuster slide (7) has integrally injection-moulded sliding and fixing shoes (19) of plastic material which can be nipped in to pass through the guide slot (3) upon assembly of the guide rail (17) but thereafter overreach the guide slot (3) and are guided externally on the guide rail (17) and simultaneously help to hold the adjuster part (8) in the guide rail (17).

## Revendications

1. Dispositif de réglage en hauteur d'une ceinture de sécurité pour des véhicules automobiles, composé d'une glissière de guidage, ainsi que d'une partie de manoeuvre de réglage, présentant une douille filetée et mobile le long de la glissière de guidage, dans la zone d'une fente de guidage ouverte et portant une partie de blocage, mobile perpendiculairement par rapport à sa direction de déplacement, sachant que la partie de manoeuvre de réglage peut être bloquée, de façon pouvant être sélectionnée librement, à des positions d'encliquetage prévues à cette fin et que la partie de blocage est maintenue en position de blocage, à l'aide d'un organe de rappel élastique, **caractérisé en ce que** la glissière de guidage (17) est formée d'un profilé (1) à peu près en forme de U, ainsi que d'une partie complémentaire (6), reliant, au moins par tronçons, les branches libres (4) du profilé en U (1), le profilé en U (1) et la partie complémentaire (6) étant formés de métal et conformés de manière que les branches (4) du profilé en U (1) puissent être façonnés par pressage, avec la partie complémentaire (6), par une liaison à ajustement de forme et interaction de force, et le profilé en U (1) et la partie complémentaire (6), à l'état prêt au montage, forment un profilé en caisson fermé.

2. Dispositif de réglage en hauteur d'une ceinture de sécurité selon la revendication 1, **caractérisé en ce que** le profilé en U (1) est formé de métal léger.

3. Dispositif de réglage en hauteur d'une ceinture de sécurité selon la revendication 1, **caractérisé en ce que** la partie complémentaire (6) est formée d'un alliage d'aluminium ou d'acier.

4. Dispositif de réglage en hauteur d'une ceinture de sécurité selon l'une des revendications 1 à 3 **caractérisé en ce que** la partie complémentaire (6) présente des évidements (6a) s'étendant dans la direction des branches (4) du profilé en U (1), évidements dans lesquels les branches (4) s'engagent, par des tronçons (5) en forme de pattes, leurs dépassements en direction du plan de la partie complémentaire (6) étant repliés.

5. Dispositif de réglage en hauteur d'une ceinture de sécurité selon l'une des revendications 1 à 4, **caractérisé en ce que** les branches (4) du profilé en U (1) présentent une butée latérale (4a) pour la partie complémentaire (6), afin de délimiter précisément l'espacement et la fixation sûre sur le profilé en U (1).

6. Dispositif de réglage en hauteur d'une ceinture de sécurité selon l'une des revendications 1 à 5, **caractérisé en ce que** les branches libres (4) présentent, du côté intérieur, à proximité de leur extrémité, une rainure (20) faisant office de points destinés au pliage.

7. Dispositif de réglage en hauteur d'une ceinture de sécurité selon l'une des revendications 1 à 6, **caractérisé en ce que** les branches (4), à la transition envers la face avant du profilé en U (1), présentent une section transversale épaissie.

8. Dispositif de réglage en hauteur d'une ceinture de sécurité selon l'une des revendications 1 à 6, **caractérisé en ce que** les branches (4) forment chacune, avec la face avant du profilé en U (1), une zone de transition et de rigidification (24, 24') du genre d'une bosse.

9. Dispositif de réglage en hauteur d'une ceinture de sécurité selon l'une des revendications 1 à 8, **caractérisé en ce que** la partie complémentaire (6) est une partie de montage, rigidifiée par déformation.

10. Dispositif de réglage en hauteur d'une ceinture de sécurité selon l'une des revendications 1 à 9, **caractérisé en ce que** la partie complémentaire (6) présente des évidements (6b) servant à délimiter des positions d'encliquetage, munis d'un chanfrein (18) sur leur côté non sollicité.

11. Dispositif de réglage en hauteur d'une ceinture de sécurité selon l'une des revendications 1 à 10, **caractérisé en ce que** la partie de manoeuvre de réglage (8) forme le noyau métallique d'un chariot de manoeuvre (7) en matière synthétique, et le chariot de manoeuvre (7) est muni de patins de glissement et de fixation (19) en matière synthétique, rapportés par injection et pouvant être pressés lors du montage de la glissière de guidage (17), pour permettre un passage à travers la fente de guidage (3), mais qui, ensuite, cependant , entourent la fente de guidage (3) et sont guidés extérieurement sur la glissière de guidage (17), sachant qu'ils contribuent simultanément au maintien de la partie de manoeuvre (8) dans la glissière de guidage (17).
